# EUROPÄISCHE PATENTSCHRIFT

(11) **EP 2 686 842 B1**
(45) Veröffentlichungstag und Bekanntmachung des Hinweises auf die Patenterteilung: **26.11.2014**
(21) Anmeldenummer: 12711742.2
(22) Anmeldetag: 06.03.2012
(51) Int. Cl.: G08G 1/14, E04H 6/42

(54) **VORRICHTUNG ZUM ÜBERWACHEN EINES FAHRZEUG-STELLPLATZES**
DEVICE FOR MONITORING A VEHICLE PARKING PLACE
DISPOSITIF POUR SURVEILLER UN EMPLACEMENT DE STATIONNEMENT D'UN VÉHICULE

(30) Priorität: 17.03.2011 EP 11450037
(43) Veröffentlichungstag der Anmeldung: 22.01.2014
(73) Patentinhaber: Kapsch TrafficCom AG, 1120 Wien (AT)
(72) Erfinder: NAGY, Oliver, A-1190 Wien (AT)
(74) Vertreter: Weiser, Andreas
(86) Internationale Anmeldenummer: PCT/AT2012/050029
(87) Internationale Veröffentlichungsnummer: WO 2012/122579

(56) Entgegenhaltungen:
- EP-A1- 1 986 172
- DE-A1-102007 052 819
- US-A- 6 107 942
- US-A1- 2006 179 671

## Beschreibung

Diese Anmeldung beansprucht die Priorität der Europäischen Patentanmeldung Nr. 11 450 037.4, deren Offenbarung hier durch Bezugnahme aufgenommen wird.

Die vorliegende Erfindung betrifft eine Vorrichtung zum Überwachen eines Stellplatzes für ein Fahrzeug, mit einer dem Stellplatz zugeordneten und daran montierten Kameraeinheit zum Bildaufzeichnen einer stirnseitigen Kennzeichentafel des Fahrzeugs. Die Erfindung betrifft ferner einen Parkplatz mit einer Vielzahl von jeweils mit einer solchen Vorrichtung ausgerüsteten Stellplätzen für Fahrzeuge.

Parkplatzüberwachungssysteme sind in einer großen Zahl von Varianten bekannt. Aus der US 2006/0179671 A1 ist es bekannt, mittels vertikaler Lichtfächer den Fahrer auf einen Parkplatz einweisende Bodenmarkierungen zu projizieren. In der US 6 107 942 A wird ein System zur Belegungserkennung von Stellplätzen auf einem Parkplatz offenbart, wobei auf dem Boden jedes Stellplatzes mehrere verschieden ausgerichtete Markierungslinien aufgemalt sind und jeder Stellplatz über eine Kamera verfügt, welche auf optischem Weg anhand des Verdeckens der Markierungslinien die Stellplatzbelegung durch ein Fahrzeug detektiert. Um das Verdecken der Bodenmarkierung zuverlässig erfassen zu können, ist eine solche Kamera möglichst zentral und möglichst hoch über dem Stellplatz montiert und dadurch zum Erkennen einer stirnseitigen Kennzeichentafel des Fahrzeugs und damit zur Überwachung der korrekten Stellplatznutzung ungeeignet. Die Schrift DE 10 2007 052 819 A1 beschreibt einen Parkplatz, an dem jeder Stellplatz mit Kameras zum OCR-Lesen (Optical Character Recognition) des Fahrzeugkennzeichens von der Kennzeichentafel des abgestellten Fahrzeugs ausgestattet ist. Solche Kameras werden etwa zentral an der Stirnseite des Stellplatzes angebracht, um eine Kennzeichentafel und damit das den Stellplatz nutzende Fahrzeug identifizieren zu können. Sie sind jedoch ungeeignet, das korrekte Abstellen des Fahrzeugs am Stellplatz optisch zu erfassen. Andere Systeme, wie im Boden eingelassene Induktionsschleifen, bedürfen im Vergleich zu optischen Systemen eines höheren Bauaufwands, und liefern gerade im Stellplatz-Randbereich zu geringe Genauigkeit.

Die Erfindung setzt sich zum Ziel, eine Vorrichtung zum Überwachen eines Stellplatzes zu schaffen, die mit nur einer Kameraeinheit sowohl das stellplatzgenaue Abstellen des Fahrzeugs überwacht als auch eine Fahrzeugidentifikation ermöglicht.

Dieses Ziel wird mit einer Vorrichtung der einleitend genannten Art erreicht, die sich auszeichnet durch
eine dem Stellplatz zugeordnete, daran montierte Leuchteinheit zum Projizieren eines in einer im wesentlichen vertikalen Ebene liegenden Lichtfächers entlang einer Begrenzung des Stellplatzes als Bodenmarkierung,
wobei die Kameraeinheit im wesentlichen in der Ebene des Lichtfächers liegt derart, dass mit ihrer Hilfe eine Unterbrechung bzw. Abschattung der Bodenmarkierung detektierbar ist, und einen Öffnungswinkel hat, von dem sowohl die Bodenmarkierung als auch die Kennzeichentafel erfasst sind.

Der projizierte Lichtfächer schafft somit auf einfache Weise eine Begrenzung des Stellplatzes; wird diese Begrenzung an irgendeiner Stelle, z.B. durch ein parkendes Fahrzeug, durchbrochen, so ist jedenfalls auch die projizierte Bodenmarkierung unterbrochen. Eine solche Unterbrechung der Bodenmarkierung kann von einer etwa in der Ebene des Lichtfächers liegenden Kameraeinheit erfasst werden, die im Vergleich zum Stand der Technik darüberhinaus keine wesentlichen Einschränkungen bezüglich ihrer Anordnung und Ausrichtung am Stellplatz hat. Somit kann eine an sich bekannte Kameraeinheit so ausgerichtet sein, dass in ihrem Öffnungswinkel zugleich auch die Kennzeichentafel des am Stellplatz parkenden Fahrzeugs liegt und aufgezeichnet werden kann. Dadurch lässt sich die Parkpositionsüberwachung eines Fahrzeugs am Stellplatz und eine Kennzeichenaufzeichnung mit nur einer Kameraeinheit und einer einfachen Leuchteinheit bewerkstelligen.

Die Leuchteinheit kann dabei einen Lichtfächer in einem unsichtbaren Wellenlängenbereich, Infrarot oder Ultraviolett, projizieren, wodurch eine Irritation des Fahrzeuglenkers sowie die Gefahr einer Störung durch andere Lichtquellen reduziert wird, bevorzugt jedoch liegt der von der Leuchteinheit projizierte Lichtfächer im sichtbaren Wellenlängenbereich. Dadurch sind die projizierte Bodenmarkierung selbst und ein Parken im Lichtfächer auch für den Fahrzeuglenker anhand der dann unterbrochenen Bodenmarkierung erkennbar; auch kann eine zusätzliche, aufgemalte Bodenmarkierung entfallen.

Um die Kennzeichentafel gut erfassen zu können, ist die Kameraeinheit bevorzugt auf einer Höhe zwischen 10 und 120 cm, besonders bevorzugt zwischen 25 und 50 cm, montiert.

Besonders vorteilhaft ist es, wenn die Leuchteinheit oberhalb der Kameraeinheit montiert ist. So unterbrechen auch höhergelegene Teile und Aufbauten des Fahrzeugs den Lichtfächer, wenn das Fahrzeug nicht stellplatzgenau abgestellt ist.

Gemäß einer weiteren vorteilhaften Ausgestaltung der Erfindung ist die Kameraeinheit zum OCR-Lesen eines Fahrzeugkennzeichens von der Kennzeichentafel ausgebildet. Damit sind insbesondere im Falle des Falschparkens die Zulassungsdaten des Fahrzeugs elektronisch erfassbar und können einer automatischen Weiterbearbeitung zugeführt werden.

In einem zweiten Aspekt schafft die Erfindung einen Parkplatz mit einer Vielzahl von mit jeweils einer der vorgenannten Vorrichtungen ausgerüsteten Stellplätzen für Fahrzeuge, wobei jeder Lichtfächer jeweils zwei benachbarte Stellplätze voneinander abgrenzt. Im Falle zweier oder mehrerer direkt aneinandergrenzender Stellplätze auf einem Parkplatz genügt somit jeweils eine der genannten Vorrichtungen pro Stellplatz, um die Stellplätze voneinander auch beidseitig abzugrenzen.

In einem dritten Aspekt schafft die Erfindung einen Parkplatz mit einer Vielzahl von mit jeweils einer der genannten Vorrichtungen mit Kameraeinheit zum OCR-Lesen ausgerüsteten Stellplätzen für Fahrzeuge, die Kennzeichentafeln mit OCR-lesbaren Fahrzeugkennzeichen und Onboard-Units mit funkauslesbaren Funkkennungen haben, welcher Parkplatz sich dadurch auszeichnet, dass er einen Zentralrechner zum Speichern von Stellplatzreservierungen aus Stellplätzen, Fahrzeugkennzeichen und zugeordneten Funkkennungen, eine den Stellplätzen gemeinsame Funkbake an einer Einfahrt des Parkplatzes zum Funkauslesen der Funkkennung eines einfahrenden Fahrzeugs und Melden an den Zentralrechner, und für jeden Stellplatz jeweils die genannte Vorrichtung zum Melden des OCR-gelesenen Fahrzeugkennzeichens eines darauf parkenden Fahrzeugs an den Zentralrechner umfasst, wobei der Zentralrechner dafür ausgebildet ist zu überprüfen, ob zu einer ihm gemeldeten Funkkennung das in einer gespeicherten Stellplatzreservierung zugeordnete Fahrzeugkennzeichen anschließend von der Kameraeinheit dieses Stellplatzes gemeldet wird, und wenn nicht, dies zu protokollieren.

Die an den Stellplätzen eingesetzten Kameraeinheiten können somit nicht nur zur optischen Kontrolle der korrekten Parkposition eines parkenden Fahrzeugs und zum OCR-Lesen des Fahrzeugkennzeichens dienen, sondern in Verbindung mit einer Funkbake, welche Funk-Onboard-Units (Funk-OBUs) der Fahrzeuge an der Einfahrt auslesen kann, zusätzlich eine vollautomatische Reservierung, Freigabe und Kontrolle einer Vielzahl von Stellplätzen in einem Parkplatzmanagementsystem ermöglichen. Die Identifizierung eines einfahrenden Fahrzeugs erfolgt damit auf fälschungssichere und störungsunanfällige Weise über Funk, wogegen die Lokalisierung und Validierung des Fahrzeugs auf dem Stellplatz wiederum mit hoher Ortungssicherheit durch optische Erkennung (OCR) erfolgt. Die Kombination aus zentraler Funk-Identifizierung und dezentraler optischer Lokalisierung und Validierung ermöglicht einen vollautomatischen, hochsicheren und störungsunanfälligen Betrieb des Parkplatzes. Dabei können auch alle in der Technik bekannten Funktionalitäten wie Vorabreservierung über das Internet, automatische Abrechnung der Parkgebühren, automatische Ahndung von Parkvergehen und statistische Auswertungen bereitgestellt werden.

Günstig ist es, wenn die Kameraeinheit zusammen mit dem Zentralrechner ein Verdecken der Bodenmarkierung durch ein darauf parkendes Fahrzeug detektiert und protokolliert. Dadurch wird ein nicht-korrekt abgestelltes Fahrzeug nicht nur erkannt, sondern ein solcher Vorfall kann auch zentral aufgezeichnet, im Reservierungssystem berücksichtigt und gegebenenfalls geahndet werden.

Eine bevorzugte Ausführungsform der Erfindung zeichnet sich dadurch aus, dass an der Einfahrt eine zusätzliche Kameraeinheit zum OCR-Lesen des Fahrzeugkennzeichens eines einfahrenden Fahrzeugs und Melden an den Zentralrechner montiert und der Zentralrechner ferner dafür ausgebildet ist zu überprüfen, ob eine gemeldete Funkkennung und ein von der zusätzlichen Kameraeinheit gemeldetes Fahrzeugkennzeichen einander in einer Stellplatzreservierung zugeordnet sind, und wenn nicht, dies zu protokollieren. Dadurch kann eine zusätzliche Validierungsstufe an der Einfahrt eingerichtet werden, welche die Sicherheit gegenüber missbräuchlichen Verwendungen des Parkplatzes weiter erhöht.

Zur raschen Information des Benutzers kann an der Einfahrt ferner eine vom Zentralrechner gesteuerte Anzeigetafel montiert und der Zentralrechner dafür ausgebildet werden, den Stellplatz, der einer ihm gemeldeten Funkkennung in einer Stellplatzreservierung zugeordnet ist, auf der Anzeigetafel anzuzeigen.

Der Parkplatz der Erfindung eignet sich für das Zusammenwirken mit funkauslesbaren Onboard-Units beliebiger Art, z.B. von Fahrzeugen mitgeführten Transpondern, RFID-Chips usw. Bevorzugt ist die Funkbake eine DSRC-Funkbake zum Funkauslesen von Onboard-Units eines DSRC- (dedicated short range communication) -Straßenmautsystems. DSRC-Funkbaken bieten aufgrund ihres begrenzten Kommunikationsbereiches, der auf den Einfahrtsbereich des Parkplatzes beschränkt werden kann, erhöhte Störungssicherheit und eine eindeutige Zuordnung und Lokalisierung zur aktuell gelesenen Onboard-Unit.

Die Parkplatzlösung der Erfindung eignet sich gemäß einem weiteren Aspekt besonders für eine Ausstattung der Stellplätze mit elektrischen Fahrzeug-Ladestationen ("Stromtankstellen"), welche vom Zentralrechner gesteuert werden, indem dieser nach erfolgreicher Überprüfung des von der Kameraeinheit des jeweiligen Stellplatzes gemeldeten Fahrzeugkennzeichens die Ladestation zum Laden freischaltet. Aufgrund der erfindungsgemäßen Kombination aus Funk-Identifizierung und OCR-Lokalisierung der Fahrzeuge wird eine hohe Validierungssicherheit des auf einem Stellplatz befindlichen Fahrzeuges erreicht, wodurch eine missbräuchliche Verwendung von Ladestationen, z.B. der Ladestation eines benachbarten (nicht reservierten) Stellplatzes, ausgeschlossen ist.

Bevorzugt enthält die Stellplatzreservierung auch fahrzeugspezifische Ladeparameter, welche der Zentralrechner an die Ladestation des Stellplatzes senden kann. Solche Ladeparamenter können beispielsweise bei der Reservierung des Stellplatzes vom Benutzer in den Zentralrechner eingegeben werden oder - bevorzugt - mittels Funkbake aus der Onboard-Unit ausgelesen und der Stellplatzreservierung automatisch hinzugefügt werden. Zu diesem Zweck werden die fahrzeugspezifischen Ladeparameter dementsprechend in der Onboard-Unit funkauslesbar hinterlegt.

Diese Eigenschaft ist besonders günstig, wenn der Benutzer keine Vorab-Stellplatzreservierung vorgenommen hat, sondern eine "ad-hoc"-Stellplatzreservierung direkt an der Einfahrt tätigt, um z.B. einen gerade freien Stellplatz mit einer Ladestation sofort zu benutzen. Sämtliche fahrzeugspezifischen Ladeparameter sind lokal auf der Onboard-Unit gespeichert und stehen der Ladestation damit sofort zur Verfügung. Dadurch brauchen auch keine Nutzerdaten z.B. über Datenleitungen von entfernten übergeordneten Zentralen angefragt werden, was für eine ad-hoc-Stellplatzreservierung aufgrund der meist längeren Dauer solcher entfernter Abfragen ungünstig wäre.

Die Verwendung einer Kameraeinheit für die OCR-Lokalisierung eines Fahrzeuges auf einem mit einer Ladestation ausgestatteten Stellplatz ermöglicht auch die weitere Option, die Kameraeinheit gleichzeitig zur Überwachung des Ladevorganges einzusetzen, indem die Kameraeinheit auch ein Wärmebild des Fahrzeugs während des Ladevorgangs aufnimmt, um bei Überschreitung einer Maximaltemperatur einen Alarm auszulösen. Dadurch können gefährliche Überhitzungen z.B. aufgrund von defekten Fahrzeugbatterien oder fehlerhaften Ladevorgängen verhindert werden.

Die Erfindung wird nachstehend anhand von in den beigeschlossenen Zeichnungen dargestellten Ausführungsbeispielen näher erläutert. In den Zeichnungen zeigen
Fig. 1 einen erfindungsgemäßen Parkplatz in einer schematischen Perspektivansicht zusammen mit blockschaltbildlich dargestellten elektrischen Komponenten;
Fig. 2 aneinandergrenzende, jeweils mit einer erfindungsgemäßen Vorrichtung ausgestattete Stellplätze des Parkplatzes von Fig. 1 in einer schematischen Draufsicht; und
Fig. 3 einen der Stellplätze von Fig. 2 in einer schematischen Seitenansicht.

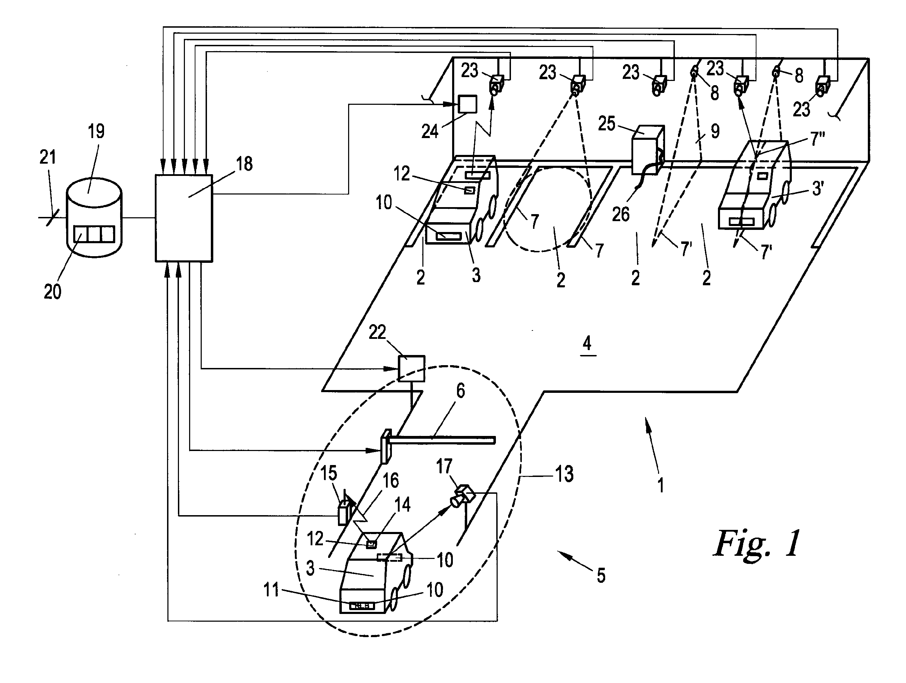

In Fig. 1 ist ein Parkplatz 1 mit einer Vielzahl von Stellplätzen 2 für jeweils ein Fahrzeug 3 gezeigt. Die Stellplätze 2 sind über eine vorgelagerte Verkehrsfläche 4 von einer gemeinsamen Einfahrt 5 her erreichbar. Die Einfahrt 5 ist beispielsweise mit einem Schranken 6 versehen, obwohl dies nicht zwingend ist. Die einzelnen Stellplätze 2 sind jeweils durch Bodenmarkierungen 7, 7' voneinander abgeteilt bzw. getrennt. Die Bodenmarkierungen 7 können beispielsweise mit Farbe auf den Boden aufgetragen sein oder - wie im Falle der Bodenmarkierungen 7' - von einer oder mehreren Leuchteinheiten 8 als Lichtmarkierungen auf den Boden projiziert sein, beispielsweise in Form von Lichtfächern 9, wie später noch ausführlicher erörtert wird.

Jedes der Fahrzeuge 3, die den Parkplatz 1 benutzen, besitzt in herkömmlicher Art und Weise eine oder mehrere Kennzeichentafeln 10, auf denen sein Fahrzeugkennzeichen 11 optisch lesbar aufgedruckt ist. Die Fahrzeuge 3 führen ferner funkabfragbare Fahrzeuggeräte (Onboard-Units, OBUs) 12 mit sich, wie sie beispielsweise für den Betrieb in elektronischen Straßenmautsystemen Verwendung finden und jeweils eine eindeutige, über Funk auslesbare Funkkennung 14 (OBU-ID) haben. Die Funkkennung 14 kennzeichnet in der Regel (nur) die Onboard-Unit 12, kann aber auch direkt dem Fahrzeugkennzeichen 11 entsprechen oder dieses enthalten. Die Onboard-Units 12 können eigene Geräte oder jeweils Bestandteil der Fahrzeugelektronik der Fahrzeuge 3 sein.

An der Einfahrt 5 ist weiters eine Funkbake 15 zum Funkauslesen (Pfeil 16) der Funkkennung 14 der Onboard-Unit 12 eines einfahrenden Fahrzeuges 3 aufgestellt. Die Funkbake 15 hat bevorzugt einen auf den Einfahrtsbereich der Einfahrt 5 begrenzten Funkabdeckungsbereich 13.

Es versteht sich, dass die Funkbake 15 auch mehrere verteilte Funkeinheiten haben kann, z.B. bei einer Einfahrt 5 mit mehreren Fahrspuren, denen jeweils eine separate Funkeinheit mit einem auf diese Fahrspur begrenzten eigenen Funkabdeckungsbereich zugeordnet ist.

Die Funkkommunikation 16 zum Funkauslesen der Funkkennung 14 erfolgt bevorzugt nach dem DSRC-Standard (dedicated short range communication), und die Funkbake 15 ist demgemäß eine DSRC-Funkbake und die Onboard-Unit 12 eine DSRC-OBU. Alternativ könnte die Funkkommunikation 16 auch nach anderen Kurzstrecken-Kommunikationsstandards erfolgen, z.B. WLAN (wireless local area network), WAVE (wireless access in a vehicle environment), Bluetooth^{®}, RFID (radio frequency identification), NFC (near field communication), usw.

An der Einfahrt 5 ist ferner eine Kameraeinheit 17 zum optischen Lesen des Fahrzeugkennzeichens 11 eines einfahrenden Fahrzeuges 3 montiert. Die Funkbake 15 und die Kameraeinheit 17 der Einfahrt 5 sind an einen Zentralrechner 18 des Parkplatzes 1 angeschlossen. Die Funkbake 15 meldet eine von ihr funkabgefragte Funkkennung 14 an den Zentralrechner 18, und die Kameraeinheit 17 meldet ein von ihr gelesenes Fahrzeugkennzeichen 11 ebenfalls an den Zentralrechner 18.

Das von der Kameraeinheit 17 gelesene Fahrzeugkennzeichen 11 wird bevorzugt mittels optischer Zeichenerkennung (optical character recognition, OCR) in einen alphanumerischen Wert umgewandelt und dem Zentralrechner 18 gemeldet. Es versteht sich, dass der OCR-Auswertungsalgorithmus auch im Zentralrechner 18 ablaufen kann; die entsprechenden OCR-Komponenten des Zentralrechners 18 werden hier ebenfalls zur Kameraeinheit 17 gezählt, falls sie nicht direkt in dieser implementiert sind.

Der Schranken 6 kann, falls vorhanden, ebenfalls vom Zentralrechner 18 angesteuert werden.

Der Zentralrechner 18 verfügt über eine Datenbank 19 mit Stellplatzreservierungen 20, welche jeweils eine Nummer bzw. einen Ort eines Stellplatzes 2 sowie ein Fahrzeugkennzeichen 11 und eine diesem zugeordnete Funkkennung 14 eines Fahrzeuges 3 enthalten. Die Stellplatzreservierungen 20 können beispielsweise vom Benutzer vorab in die Datenbank 19 eingetragen worden sein, z.B. über ein Webinterface 21 des Zentralrechners 18 oder seiner Datenbank 19.

Bei der Einfahrt eines Fahrzeuges 3 meldet die Funkbake 15 die Funkkennung 14 des Fahrzeuges 3 an den Zentralrechner 18 und dieser ermittelt die zur Funkkennung 14 zugehörige Stellplatzreservierung 20 aus der Datenbank 19. Wenn die (optionale) Kameraeinheit 17 vorgesehen ist, kann diese zusätzlich das OCR-gelesene Fahrzeugkennzeichen 11 an den Zentralrechner 18 melden und dieser das Fahrzeugkennzeichen 11 mit dem in der Stellplatzreservierung 20 gespeicherten Fahrzeugkennzeichen gegenprüfen.

Bei einer für die gemeldete Funkkennung 14 gültigen Stellplatzreservierung 20 und optional bei erfolgreicher Gegenprüfung auch des Fahrzeugkennzeichens 11 steuert der Zentralrechner 18 den Schranken 6 - falls vorhanden - zum Öffnen an. Ferner kann der Zentralrechner 18 auf einer Anzeigetafel 22 an der Einfahrt 5 dem Benutzer des Fahrzeuges 3 die Stellplatzreservierung 20 anzeigen, um ihm z.B. die Nummer oder den Ort des Stellplatzes 2 visuell mitzuteilen. Eine oder mehrere Anzeigetafeln 22 können auch an den Stellplätzen 2 angeordnet sein, um den Fahrer auf den für ihn reservierten Stellplatz einzuweisen.

Anstelle der geschilderten Überprüfung einer "Vorab"-Stellplatzreservierung kann alternativ auch eine "ad-hoc"-Stellplatzreservierung direkt an der Einfahrt 5 vorgenommen werden. In diesem Fall meldet die Funkbake 15 die funkabgefragte Funkkennung 14 und die Kameraeinheit 17 das OCR-gelesene Fahrzeugkennzeichen 11 an den Zentralrechner 18 und dieser ermittelt einen freien Stellplatz 2 und ordnet Funkkennung 14, Fahrzeugkennzeichen 11 und Nummer des Stellplatzes 2 einander in einer Stellplatzreservierung 20 in der Datenbank 19 zu.

Wenn die Funkkennung 14 direkt dem Fahrzeugkennzeichen 11 entspricht oder dieses enthält, kann bereits alleine aus der Meldung der Funkkennung 14 an den Zentralrechner 18 eine Stellplatzreservierung 20 angelegt werden; in diesem Fall kann die (optionale) Kameraeinheit 17 für die Gegenprüfung des in der Funkkennung 14 angegebenen Fahrzeugkennzeichens 11 mit dem OCR-gelesenen Fahrzeugkennzeichen 11 im Zentralrechner 18 eingesetzt werden.

Der Benutzer fährt anschließend mit dem Fahrzeug 3 auf den für ihn reservierten Stellplatz 2. Jeder Stellplatz 2 ist mit einer eigenen Kameraeinheit 23 ausgestattet, welche das Fahrzeugkennzeichen 11 des darauf parkenden (oder auf diesen einfahrenden, dies wird hier als vom Begriff "Parken" mitumfasst angesehen) OCR-erfasst. Die Kameraeinheiten 23 der Stellplätze 2 melden jeweils die von ihnen OCR-gelesenen Fahrzeugkennzeichen 11 an den Zentralrechner 18, wobei die OCR-Algorithmen auch auf dem Zentralrechner 18 laufen können, was hier von dem Begriff "OCR-Kameraeinheiten" 23 mitumfasst ist.

Der Zentralrechner 18 ist dafür programmiert, nach Meldung einer Funkkennung 14 von der Funkbake 15 zu überprüfen, ob anschließend - bevorzugt innerhalb einer vorgegebenen Zeitspanne - von der Kameraeinheit 23 jenes Stellplatzes 2, der in der Stellplatzreservierung 20 mit dieser Funkkennung 14 angegeben ist, auch das in dieser Stellplatzreservierung 20 angegebene Fahrzeugkennzeichen 11 gemeldet wird. Wenn ja, handelt es sich um einen ordnungsgemäßen Parkvorgang, welcher z.B. vom Zentralrechner 18 auch entsprechend vergebührt werden kann. Wenn nein, hat das Fahrzeug 3 offensichtlich einen falschen Stellplatz 2 erreicht, und dieser Umstand wird vom Zentralrechner 18 zumindest protokolliert; optional können entsprechende Alarme, Warnmeldungen, Warnansagen über Lautsprecher oder Warnanzeigen auf Hinweistafeln 24 der Stellplätze 2 ausgegeben werden.

Das Funkauslesen 16 der Funkkennung 14 mittels der Funkbake 15 gewährleistet damit eine störungsunanfällige Identifizierung eines einfahrenden Fahrzeuges 3, und die OCR-Kameraeinheiten 23 der Stellplätze 2 eine ortungsgenaue Lokalisierung und Validierung des geparkten Fahrzeuges 3.

Die Kameraeinheiten 23 können darüber hinaus, gegebenenfalls auch ausschließlich, zur Überprüfung der korrekten Parkposition bzw. -lage der Fahrzeuge 3 auf den Stellplätzen 2 herangezogen werden, indem sie die Bodenmarkierungen 7, 7' optisch überwachen bzw. auswerten.

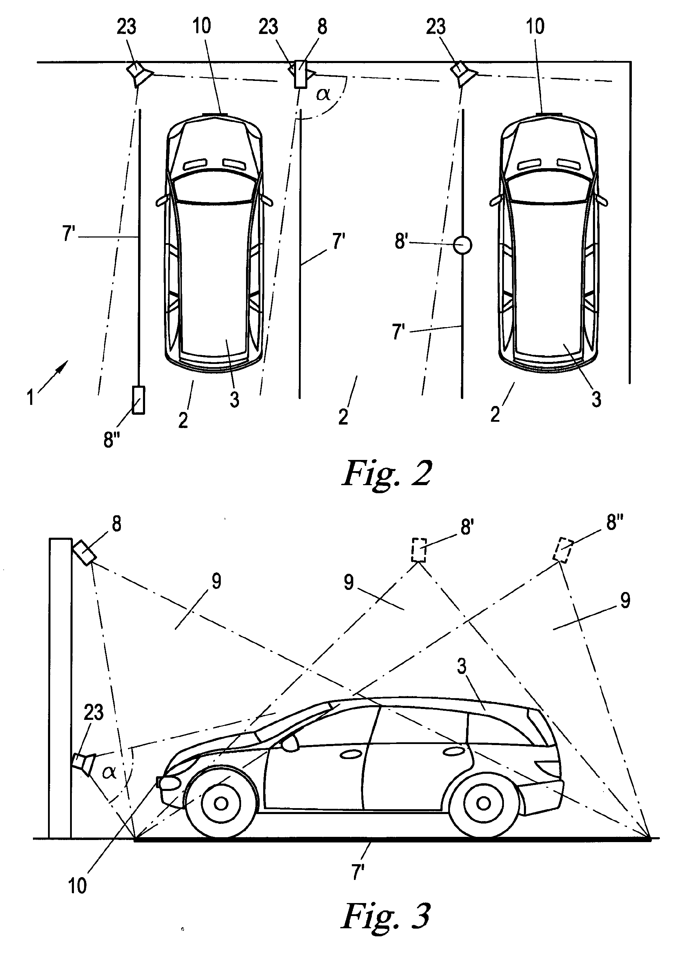

Gemäß den Fig. 2 und 3 ist an einem Stellplatz 2, insbesondere oberhalb der Kameraeinheit 23, eine Leuchteinheit 8, 8', 8" montiert. Sie wirft entlang einer der Begrenzungen des Stellplatzes 2, dem sie zugeordnet ist, hier seiner seitlichen Begrenzung, in einer etwa vertikalen Ebene einen Lichtfächer 9 auf den Boden des Parkplatzes 1. Der Lichtfächer 9 kann von der Leuchteinheit 8, 8', 8" z.B. mittels einer Glühlampe oder Leuchtdiode unter Nachschaltung einer Schlitzblende bzw. Zylinderlinse oder mittels eines Laserscanners erzeugt werden. Die Leuchteinheit 8, 8', 8" projiziert dabei je nach verwendeter Lichtwellenlänge eine sichtbare oder unsichtbare Bodenmarkierung 7' an die Begrenzung des Stellplatzes 2. Zusätzlich zur projizierten Bodenmarkierung 7' kann, wenn gewünscht, eine Bodenmarkierung 7 mit Farbe auf den Boden des Parkplatzes 1 aufgetragen sein.

Jedes lichtundurchlässige Objekt im Lichtfächer 9, z.B. ein darin abgestelltes Fahrzeug 3, führt zu einer Unterbrechung des Lichtfächers 9 und damit zu einer - zumindest teilweisen - Abschattung bzw. Unterbrechung der Bodenmarkierung 7'. Um eine solche Unterbrechung bzw. Abschattung der Bodenmarkierung 7' zu detektieren, liegt die Kameraeinheit 23 etwa in der Ebene des Lichtfächers 9 und hat zumindest einen solchen Öffnungswinkel α und eine solche Ausrichtung, dass sie z.B. im einen Randbereich ihres Öffnungswinkels α das Bild der Bodenmarkierung 7' aufzeichnet, während sie gleichzeitig die stirnseitige Kennzeichentafel 10 des am Stellplatz 2 geparkten Fahrzeugs 3 z.B. im anderen Randbereich ihres Öffnungswinkels α erfasst. Gegebenenfalls könnte die Kameraeinheit 23 dazu auch gekippt sein, sodass ihre Bildaufzeichnung die Horizontale schräg darstellt. Um dabei das Fahrzeugkennzeichen 10 gut bildaufzeichnen zu können, liegt die Kameraeinheit 23 bevorzugt etwa in der Höhe einer üblichen Kennzeichentafel 10, d.h. auf einer Höhe zwischen 10 und 120 cm, bevorzugt zwischen 25 und 50 cm.

In der vorliegenden Offenbarung ist unter dem Öffnungswinkel α der Kameraeinheit 23 sowohl dessen horizontale wie dessen vertikale Erstreckung mitumfasst. Der Öffnungswinkel α kann einen kegelförmigen Raumwinkel definieren; auf dem Gebiet des optischen Bildaufzeichnens mit Kameras wird häufig ein rechteckiger Bildausschnitt abgebildet, sodass der Öffnungswinkel α in der Regel einen pyramidenförmigen Sichtbereich mit rechteckiger Grundfläche definiert, in dessen Spitze die Kameraeinheit 23 liegt. In diesem Fall können horizontale und vertikale Erstreckung des Öffnungswinkels α auch voneinander verschieden sein, auch wenn dies nicht zwingend ist. Der Öffnungswinkel α wird jedenfalls durch die Brennweite der Kameraoptik der Kameraeinheit 23 bestimmt; die Wahl der zu diesem Zweck geeigneten Brennweite ist dem Fachmann auf dem Gebiet der Kameratechnik bekannt.

Detektiert die Kameraeinheit 23 - gegebenenfalls zusammen mit dem Zentralrechner 18 - eine Abschattung bzw. Unterbrechung der Bodenmarkierung 7' durch ein darauf parkendes Fahrzeug 3, so kann dies protokolliert bzw. gemeldet werden. Eine solche Meldung kann ein optisches und/oder akustisches Signal am Stellplatz 2 umfassen, z.B. auf der Hinweistafel 24 oder über Lautsprecher, sodass der Fahrzeuglenker die Position bzw. Lage seines Fahrzeugs 3 am Stellplatz 2 verändern kann. Sie kann von der Kameraeinheit 23 an den Zentralrechner 18 ergehen, welcher in der Folge einen weiteren Stellplatz 2 als belegt kennzeichnen und gegebenenfalls das nicht-korrekte Parken anhand des OCR-gelesenen Fahrzeugkennzeichens 10 ahnden kann.

Wie in Fig. 2 erkennbar, genügt bei einem Parkplatz 1 mit einer Vielzahl von Stellplätzen 2 jeweils eine Vorrichtung mit Kameraeinheit 23 und Leuchteinheit 8, 8', 8", um zwei benachbarte Stellplätze 2 voneinander abzugrenzen.

Die Fig. 2 und 3 zeigen, dass die Leuchteinheit 8, 8', 8" als Leuchteinheit 8 etwa direkt über der Kameraeinheit 23, als Leuchteinheit 8' etwa stellplatzmittig, als Leuchteinheit 8" am der Kameraeinheit 23 gegenüberliegenden Ende des Stellplatzes 2 oder an einer anderen Stelle über der Begrenzung des Stellplatzes 2, bevorzugt oberhalb der Kameraeinheit 23, montiert sein kann. Es könnten auch jeweils zwei oder mehr Leuchteinheiten 8, 8', 8" für jeden Stellplatz 2 vorgesehen sein, die alle ihre Lichtfächer 9 etwa in der gleichen vertikalen Ebene als Bodenmarkierungen 7' projizieren und zur Unterscheidung voneinander bei jeweils verschiedenen Wellenlänge und/oder jeweils einzeln und abwechselnd zeitlich nacheinander arbeiten.

Einer oder mehrere der Stellplätze 2 können überdies mit Ladestationen 25 ("Stromtankstellen") zum elektrischen Laden der parkenden Fahrzeuge 3 über ein Ladekabel 26 ausgestattet werden. Der Zentralrechner 18 kann in diesem Fall dafür programmiert sein, die Ladestation 25 bei einer erfolgreichen Funk-Identifizierung und OCR-Lokalisierung und -Validierung des Fahrzeuges 3 auf dem Stellplatz 2, d.h. wenn Funkkennung 14, Fahrzeugkennzeichen 11 und Stellplatznummer in der Stellplatzreservierung 20 einander zugeordnet sind, zum Laden des Fahrzeuges 3 freizuschalten.

Die Funkbake 15 kann dazu auch fahrzeugspezifische Ladeparameter wie Ladestrom, Ladekennlinie usw. aus der Onboard-Unit 12 funkauslesen und dem Zentralrechner 18 melden, welcher an die entsprechende Ladestation 25 sendet. Alternativ können fahrzeugspezifische Ladeparameter auch z.B. über das Webinterface 21 in die Datenbank 19 eingespeist und den Stellplatzreservierungen 20 hinzugefügt werden. Falls der Benutzer bereits registrierter Kunde des Parkplatzes ist, können die Daten in der Datenbank 19 des Zentralrechners 18 bereits bei OBU-Ausgabe an den Benutzer hinterlegt worden sein.

Die den Stellplätzen 2 zugeordneten Kameraeinheiten 23 können bei Stellplätzen 2 mit Ladestationen 25 auch zusätzlich zur Überwachung des Ladevorganges der Fahrzeuge 3 herangezogen werden, insbesondere zur Detektion von Überhitzungen oder Feuer. Dazu können die Kameraeinheiten 23 z.B. eine übermäßige Lichtentwicklung (Feuer) optisch detektieren, oder zusätzlich ein Wärmebild des abgestellten Fahrzeuges 3 aufnehmen, um bei einer Überschreitung einer Maximaltemperatur im Wärmebild einen Alarm auszulösen und/oder die Ladestation 25 sofort abzuschalten.

Die Erfindung ist nicht auf die dargestellten Ausführungsformen beschränkt, sondern umfasst alle Varianten und Modifikationen, die in den Rahmen der angeschlossenen Ansprüche fallen.

## Patentansprüche

1. Vorrichtung zum Überwachen eines Stellplatzes für ein Fahrzeug, mit einer dem Stellplatz zugeordneten und daran montierten Kameraeinheit zum Bildaufzeichnen einer stirnseitigen Kennzeichentafel des Fahrzeugs, **gekennzeichnet durch**
eine dem Stellplatz (2) zugeordnete, daran montierte Leuchteinheit (8, 8', 8") zum Projizieren eines in einer im wesentlichen vertikalen Ebene liegenden Lichtfächers (9) entlang einer Begrenzung des Stellplatzes (2) als Bodenmarkierung (7'),
wobei die Kameraeinheit (23) im wesentlichen in der Ebene des Lichtfächers (9) liegt derart, dass mit ihrer Hilfe eine Unterbrechung bzw. Abschattung der Bodenmarkierung detektierbar ist, und einen Öffnungswinkel (α) hat, von dem sowohl die Bodenmarkierung (7, 7') als auch die Kennzeichentafel (10) erfasst sind.

2. Vorrichtung nach Anspruch 1, **dadurch gekennzeichnet, dass** der von der Leuchteinheit (8, 8', 8") projizierte Lichtfächer (9) im sichtbaren Wellenlängenbereich liegt.

3. Vorrichtung nach Anspruch 1 oder 2, **dadurch gekennzeichnet, dass** die Karneraeinheit (23) auf einer Höhe zwischen 10 und 120 cm, bevorzugt zwischen 25 und 50 cm, montiert ist.

4. Vorrichtung nach einem der Ansprüche 1 bis 3, **dadurch gekennzeichnet, dass** die Leuchteinheit (8, 8', 8") oberhalb der Kameraeinheit (23) montiert ist.

5. Vorrichtung nach einem der Ansprüche 1 bis 4, **dadurch gekennzeichnet, dass** die Kameraeinheit (23) zum OCR-Lesen eines Fahrzeugkennzeichens (11) von der Kennzeichentafel (10) ausgebildet ist.

6. Parkplatz mit einer Vielzahl von mit jeweils einer Vorrichtung nach einem der Ansprüche 1 bis 5 ausgerüsteten Stellplätzen (2) für Fahrzeuge (3), wobei jeder Lichtfächer (9) jeweils zwei benachbarte Stellplätze (2) voneinander abgrenzt.

7. Parkplatz mit einer Vielzahl von mit jeweils einer Vorrichtung nach Anspruch 5 ausgerüsteten Stellplätzen für Fahrzeuge, die Kennzeichentafeln mit OCR-lesbaren Fahrzeugkennzeichen und Onboard-Units mit funkauslesbaren Funkkennungen haben, **gekennzeichnet durch**
einen Zentralrechner (18) zum Speichern von Stellplatzreservierungen (20) aus Stellplätzen(2), Fahrzeugkennzeichen (11) und zugeordneten Funkkennungen (14),
eine den Stellplätzen (2) gemeinsame Funkbake (15) an einer Einfahrt (5) des Parkplatzes (1) zum Funkauslesen (16) der Funkkennung (14) eines einfahrenden Fahrzeugs (3) und Melden an den Zentralrechner (18), und
für jeden Stellplatz (2) jeweils die genannte Vorrichtung zum Melden des OCR-gelesenen Fahrzeugkennzeichens (11) eines darauf parkenden Fahrzeugs (3) an den Zentralrechner (18),
wobei der Zentralrechner (18) dafür ausgebildet ist zu überprüfen, ob zu einer ihm gemeldeten Funkkennung (14) das in einer gespeicherten Stellplatzreservierung (20) zugeordnete Fahrzeugkennzeichen (11) anschließend von der Kameraeinheit (23) dieses Stellplatzes (2) gemeldet wird, und wenn nicht, dies zu protokollieren.

8. Parkplatz nach Anspruch 7, **dadurch gekennzeichnet, dass** die Kameraeinheit (23) zusammen mit dem Zentralrechner (18) ein Verdecken der Bodenmarkierung (7, 7') durch ein darauf parkendes Fahrzeug (3) detektiert und protokolliert.

9. Parkplatz nach Anspruch 7 oder 8, **dadurch gekennzeichnet, dass** an der Einfahrt (5) eine zusätzliche Kameraeinheit (17) zum OCR-Lesen des Fahrzeugkennzeichens (11) eines einfahrenden Fahrzeugs (3) und Melden an den Zentralrechner (18) montiert und der Zentralrechner (18) ferner dafür ausgebildet ist zu überprüfen, ob eine gemeldete Funkkennung (14) und ein von der zusätzlichen Kameraeinheit (17) gemeldetes Fahrzeugkennzeichen (11) einander in einer Stellplatzreservierung (20) zugeordnet sind, und wenn nicht, dies zu protokollieren.

10. Parkplatz nach einem der Ansprüche 7 bis 9, **dadurch gekennzeichnet, dass** an der Einfahrt (5) eine vom Zentralrechner (18) gesteuerte Anzeigetafel (22) montiert und der Zentralrechner (18) dafür ausgebildet ist, den Stellplatz (2), der einer ihm gemeldeten Funkkennung (14) in einer Stellplatzreservierung (20) zugeordnet ist, auf der Anzeigetafel (22) anzuzeigen.

11. Parkplatz nach einem der Ansprüche 7 bis 10, **dadurch gekennzeichnet, dass** die Funkbake (15) eine DSRC-Funkbake zum Funkauslesen (16) von Onboard-Units (12) eines DSRC-Straßenmautsystems ist.

12. Parkplatz nach einem der Ansprüche 7 bis 11, **dadurch gekennzeichnet, dass** zumindest ein Stellplatz (2) mit einer vom Zentralrechner (18) gesteuerten elektrischen Fahrzeug-Ladestation (25) ausgestattet ist, wobei der Zentralrechner (18) ferner dafür ausgebildet ist, nach erfolgreicher Überprüfung des von der Kameraeinheit (23) dieses Stellplatzes (2) gemeldeten Fahrzeugkennzeichens (11) die Ladestation (25) zum Laden freizuschalten.

13. Parkplatz nach Anspruch 12, **dadurch gekennzeichnet, dass** die Stellplatzreservierung (20) des genannten Stellplatzes. (2) fahrzeugspezifische Ladeparameter enthält, welche der Zentralrechner (18) an die Ladestation (25) sendet.

14. Parkplatz nach Anspruch 13, **dadurch gekennzeichnet, dass** die fahrzeugspezifischen Ladeparameter von der Funkbake (15) aus der Onboard-Unit (12) ausgelesen und der Stellplatzreservierung (20) hinzugefügt werden.

15. Parkplatz nach einem der Ansprüche 12 bis 14, **dadurch gekennzeichnet, dass** die Kameraeinheit (23) des genannten Stellplatzes (2) auch ein Wärmebild des Fahrzeugs (3) während des Ladevorgangs aufnimmt, um bei Überschreitung einer Maximaltemperatur einen Alarm auszulösen.

## Claims

1. Device for monitoring a parking space for a vehicle, having a camera unit assigned to the parking space and mounted thereon to record a picture of a frontal license plate of the vehicle, **characterized by**
a lighting unit (8, 8', 8") assigned to the parking space (2) and mounted thereon for projecting a light fan (9) lying in a substantially vertical plane along a boundary of the parking space (2) as a surface marking (7'),
wherein the camera unit (23) lies substantially in the plane of the light fan (9) such that by means thereof an interruption or shadowing of the surface marking is detectable, and has an opening angle (α) which covers both the surface marking (7, 7') and the license plate.

2. Device according to claim 1, **characterized in that** the light fan (9) projected by the lighting unit (8, 8', 8") is in the visible wavelength range.

3. Device according to claim 1 or 2, **characterized in that** the camera unit (23) is mounted at a height between 10 and 120 cm, preferably between 25 and 50 cm.

4. Device according to one of the claims 1 to 3, **characterized in that** the lighting unit (8, 8', 8") is mounted above the camera unit (23).

5. Device according to one of the claims 1 to 4, **characterized in that** the camera unit (23) is configured to OCR-read a vehicle license plate number (11) from the license plate (10).

6. Parking lot with a plurality of parking spaces (2) for vehicles (3), each parking space (2) being equipped with a device according to one of the claims 1 to 5, wherein each light fan (9) delimits two neighboring parking spaces (2) from each other.

7. Parking lot with a plurality of parking spaces, each parking space being equipped with a device according to claim 5, for vehicles that have license plates (10) with OCR-readable license plate numbers and onboard units with radio IDs that can be read out via radio, **characterized by**
a central computer (18) for storing parking space reservations (20) each comprising a parking space (2), a license plate number (11) and an assigned radio ID (14),
a radio beacon (15) common to the parking spaces (2) that is positioned at an entrance (5) of the parking lot (1) and serves for reading out (16) the radio ID (14) of an entering vehicle (3) via radio and correspondingly signaling the radio ID (14) to the central computer (18), and
for every parking space (2) each said device to signal the OCR-read license plate number (11) of a vehicle (3) parking thereon to a central computer (18),
wherein the central computer (18) is configured to check whether for a radio ID (14) signaled to the central computer the vehicle license plate number (11) assigned thereto in a stored parking space reservation (20) is subsequently signaled by the camera unit (23) of this parking space (2), and to log instances in which this is not the case.

8. Parking lot according to claim 7, **characterized in that** the camera unit (23) together with the central computer (18) detects and logs a covering of the surface marking (7, 7') by a vehicle (3) parking thereon.

9. Parking lot according to claim 7 or 8, **characterized in that** an additional camera unit (17) for OCR-reading the license plate number (11) of an entering vehicle (3) and signaling the license plate number (11) to the central computer (18) is mounted at the entrance (5), and **in that** the central computer (18) is further configured to check whether a signaled radio ID (14) and a vehicle license plate number (11) signaled by the additional camera unit (17) are assigned to one another in a parking space reservation (20), and to log instances in which this is not the case.

10. Parking lot according to one of the claims 7 to 9, **characterized in that** a display panel (22) controlled by the central computer (18) is mounted at the entrance (5), and **in that** the central computer (18) is configured to display the parking space (2) that is assigned to a radio ID (14) signaled to the central computer (18) in a parking space reservation (20) on the display panel (22).

11. Parking lot according to one of the claims 7 to 10, **characterized in that** the radio beacon (15) is a DSRC radio beacon for reading out (16) onboard units (12) of a DSRC road toll system via radio.

12. Parking lot according to one of the claims 7 to 11, **characterized in that** at least one parking space (2) is equipped with an electric vehicle charging station (25) controlled by the central computer (18), wherein the central computer (18) is further configured to unlock the charging station (25) for charging the vehicle after successfully checking the vehicle license plate number signaled by the camera unit (23) of this parking space (2).

13. Parking lot according to claim 12, **characterized in that** the parking space reservation (20) for said parking space (2) contains charging parameters that are specific to the vehicle and transmitted to the charging station (25) by the central computer (18).

14. Parking lot according to claim 13, **characterized in that** the vehicle-specific charging parameters are read from the onboard unit (12) by the radio beacon (15) and added to the parking space reservation (20).

15. Parking lot according to one of the claims 12 to 14, **characterized by** in that the camera unit (23) of said parking space (2) also records a thermal image of the vehicle (3) during the charging process in order to trigger an alarm if a maximum temperature is exceeded.

## Revendications

1. Dispositif pour la surveillance d'une place de stationnement pour véhicule, avec une unité de caméra attribuée à la place de stationnement et montée sur celle-ci, pour l'enregistrement d'images d'une plaque frontale d'immatriculation du véhicule, **caractérisé par**
une unité d'éclairage (8, 8', 8") attribuée à la place de stationnement (2) et montée sur celle-ci, pour la projection d'un faisceau lumineux (9) s'étendant dans un plan essentiellement vertical, le long d'une délimitation de la place de stationnement (2), en tant que marquage au sol (7'),
dans lequel l'unité de caméra (23) se trouve essentiellement dans le plan du faisceau lumineux (9), de façon à pouvoir détecter une interruption ou un ombrage du marquage au sol, et possède un angle d'ouverture (α) permettant de détecter aussi bien le marquage au sol (7, 7') que la plaque d'immatriculation (10).

2. Dispositif selon la revendication 1, **caractérisé en ce que** le faisceau lumineux (9) projeté par l'unité d'éclairage (8, 8', 8") se trouve dans la plage de longueur d'onde visible.

3. Dispositif selon la revendication 1 ou 2, **caractérisé en ce que** l'unité de caméra (23) est montée à une hauteur entre 10 et 120 cm, de préférence entre 25 et 50 cm.

4. Dispositif selon l'une des revendications 1 à 3, **caractérisé en ce que** l'unité d'éclairage (8, 8', 8") est montée au-dessus de l'unité de caméra (23).

5. Dispositif selon l'une des revendications 1 à 4, **caractérisé en ce que** l'unité de caméra (23) est conçue pour la lecture OCR d'un identificateur de véhicule (11) de la plaque d'immatriculation (10).

6. Parking avec une multitude de places de stationnement (2) pour véhicules (3), respectivement équipées d'un dispositif selon l'une des revendications 1 à 5, où chaque faisceau lumineux (9) sépare respectivement deux places de stationnement (2) voisines l'une de l'autre.

7. Parking avec une multitude de places de stationnement pour véhicules, respectivement équipées d'un dispositif selon la revendication 5, les véhicules possédant des plaques d'immatriculation avec des identificateurs de véhicule lisibles par OCR, ainsi que des unités de bord avec des identificateurs radio lisibles par radiofréquence, **caractérisé par**
un ordinateur central (18) pour l'enregistrement de réservations (20) de place de stationnement comprenant des places de stationnement (2), des identificateurs de véhicule (11) et des identificateurs radio (14) correspondants,
une balise (15) commune aux places de stationnement (2), au niveau d'une entrée (5) du parking (1), pour la lecture par radiofréquence (16) de l'identificateur radio (14) d'un véhicule entrant (3) et la transmission à l'ordinateur central (18), et
pour chaque place de stationnement (2), ledit dispositif pour la transmission de l'identificateur de véhicule (11) lu par OCR d'un véhicule (3) garé dessus, à l'ordinateur central (18),
dans lequel l'ordinateur central (18) est conçu pour vérifier si, pour un identificateur radio (14) transmis à celui-ci, l'identificateur de véhicule (11) correspondant enregistré dans une réservation (20) de place de stationnement est ensuite transmis par l'unité de caméra (23) de cette place de stationnement (2), et pour établir un protocole si cela n'est pas le cas.

8. Parking selon la revendication 7, **caractérisé en ce qu'**ensemble avec l'ordinateur central (18), l'unité de caméra (23) détecte et enregistre une dissimulation du marquage au sol (7, 7') par un véhicule (3) garé dessus.

9. Parking selon la revendication 7 ou 8, **caractérisé en ce qu'**une unité de caméra supplémentaire (17) est montée à l'entrée (5) pour la lecture OCR de l'identificateur de véhicule (11) d'un véhicule entrant (3) et pour la transmission à un ordinateur central (18), et l'ordinateur central (18) est en outre conçu pour vérifier si un identificateur radio (14) transmis et un identificateur de véhicule (11) transmis par l'unité de caméra supplémentaire (17) sont attribués l'un à l'autre dans une réservation (20) de place de stationnement, et pour établir un protocole si cela n'est pas le cas.

10. Parking selon l'une des revendications 7 à 9, **caractérisé en ce qu'**un panneau de signalisation (22) commandé par l'ordinateur central (18) est monté à l'entrée (5), et l'ordinateur central (18) est conçu pour indiquer, sur le panneau de signalisation (22), la place de stationnement (2) qui est attribuée à un identificateur radio (14) transmis à celui-ci dans une réservation (20) de place de stationnement.

11. Parking selon l'une des revendications 7 à 10, **caractérisé en ce que** la balise (15) est une balise DSRC pour la lecture par fréquence radio (16) d'unités de bord (12) d'un système de péage routier DSRC.

12. Parking selon l'une des revendications 7 à 11, **caractérisé en ce qu'**au moins une place de stationnement (2) est équipée d'une station (25) de chargement électrique de véhicules commandée par l'ordinateur central (18), l'ordinateur central (18) étant en outre conçu pour permettre le chargement à partir de la station de chargement (25), après vérification réussie de l'identificateur de véhicule (11) transmis par l'unité de caméra (23) de cette place de stationnement (2).

13. Parking selon la revendication 12, **caractérisé en ce que** la réservation (20) de place de stationnement de ladite place de stationnement (2) contient des paramètres de chargement spécifiques au véhicule, que l'ordinateur central (18) envoie à la station de chargement (25).

14. Parking selon la revendication 13, **caractérisé en ce que** les paramètres de chargement spécifiques au véhicule sont lus par la balise (15) à partir de l'unité de bord (12) et associées à la réservation (20) de place de stationnement.

15. Parking selon l'une des revendications 12 à 14, **caractérisé en ce que** l'unité de caméra (23) de ladite place de stationnement (2) enregistre également une image thermique du véhicule (3) pendant l'opération de chargement, pour déclencher une alarme en cas de dépassement d'une température maximale.
